# EUROPÄISCHE PATENTANMELDUNG

(11) **EP 1 459 933 A2**
(43) Veröffentlichungstag der Anmeldung: **22.09.2004**
(21) Anmeldenummer: 03028780.9
(22) Anmeldetag: 13.12.2003
(51) Int. Cl.: B60P 7/13, B60P 1/64

(54) **Verriegelungsanordnung zur Halterung von Containern auf einem Fahrgestell**

(30) Priorität: 21.03.2003 DE 10312596
(71) Anmelder: Schmitz Gotha Fahrzeugwerke GmbH, 99867 Gotha (DE)
(72) Erfinder: Koch, Josef, 89081 Ulm (DE)
(74) Vertreter: Weber, Gerhard, Dipl.-Phys.

(57) **Zusammenfassung**

Zur Halterung von Containern auf einem Fahrgestell wird eine Verriegelungsanordnung vorgeschlagen, bei welcher eine Trägeranordnung fest mit dem Fahrgestell, insbesondere dem Ende eines Querträgers verbunden ist und eine Verriegelungseinheit, z. B. mit einer twist-lock-Verriegelung werkzeuglos in die Trägeranordnung einsetzbar bzw. aus dieser entnehmbar ist. Ein Fahrgestell weist dann vorteilhafterweise an jeder u. U. benötigten Verriegelungsposition eine Trägeranordnung auf, wobei die Trägeranordnungen im Bedarfsfall auf die jeweilige Ladeaufgabe abgestimmt mit Verriegelungseinheiten bestückbar sind.

## Beschreibung

Die Erfindung betrifft eine Verriegelungsanordnung zur Halterung von Containern auf einem Fahrgestell sowie ein Fahrgestell mit solchen Verriegelungsanordnungen.

Die DE 101 48 728 A1 beschreibt Verriegelungsanordnungen zur Halterung von Containern auf einem Fahrgestell, wobei die Verriegelungsanordnung aus einer Trägeranordnung und einer in dieser verschiebbaren und abstützbaren Verriegelungseinheit. In bevorzugter Ausführungsform ist dort eine Verriegelungseinheit über eine Kulissenanordnung mit Kulissenbahnen in horizontal beabstandeten vertikalen Trägerplatten der Trägeranordnung mit dieser verbunden.

Da auf einem Fahrgestell Container unterschiedlicher Länge in verriegelter Stellung transportierbar sein sollen, sind in Längsrichtung des Fahrgestells eine Mehrzahl von Verriegelungsanordnungen paarweise vorgehalten, von welchen aber nur ein Teil für die jeweils aktuelle Transportaufgabe eingesetzt ist. aus der DE 19 66 501 A ist eine Verriegelungsanordnung mit einem Drehzapfen bekannt, bei welcher der Drehzapfen nach unten aus einem Verriegelungsgehäuse entnehmbar ist. Das Verriegelungsgehäuse, auf welchem der Beschlag eines Containers aufliegt, ist fest mit dem Fahrgestell verbunden. Die EP 0 337 011 A1 zeigt eine Tragvorrichtung mit mehreren an einem gemeinsamen Träger befestigten Verriegelungseinheiten, wobei der Träger in unterschiedlichen Winkellagen in einen Querholm eines Fahrgestells einsetzbar ist.

Der vorliegenden Erfindung liegt daher die Aufgabe zugrunde, eine für solche Einsatzfälle vorteilhafte Verriegelungsanordnung sowie ein Fahrgestell mit derartigen Verriegelungsanordnungen anzugeben.

Erfindungsgemäße Lösungen sind in den unabhängigen Ansprüchen beschrieben. Die abhängigen Ansprüche enthalten vorteilhafte Ausgestaltungen und Weiterbildungen der Erfindung.

Die erfindungsgemäße Ausgestaltung einer Verriegelungsanordnung ermöglicht vorteilhafterweise ein Fahrgestell variabel für Transportaufgaben aller gängiger Containertypen vorzubereiten, hierfür aber mit einer gegenüber den möglichen Verriegelungspositionen in Längsrichtung geringeren Anzahl von Verriegelungseinheiten auszukommen und diese je nach Transportaufgabe manuell in den passenden Verriegelungspositionen in die Trägeranordnungen einzusetzen. Von besonderer wirtschaftlicher Bedeutung ist dabei, dass die Trägeranordnungen gegenüber den Verriegelungseinheiten, welche typischerweise ein Verriegelungsgehäuse als Auflage für de Containerbeschlag und eine als twist-lock bekannte Drehzapfenverriegelung enthalten, wesentlich billiger sind die Verriegelungseinheiten. Durch den werkzeuglosen Wechsel ist ein schneller und unkomplizierter Austausch möglich.

Die Trägeranordnung ist vorzugsweise fest mit einem Ende eines Querträgers verbunden, insbesondere verschweißt. Die Trägeranordnung enthält vorteilhafterweise zwei horizontal, insbesondere in Längsrichtung des Fahrgestells beabstandete vertikale Trägerplatten, welche eine Verriegelungseinheit zwischen sich aufnehmen können. Bevorzugt sind die beiden Trägerplatten Teil eines einteiligen U-förmigen Trägerkörpers, der durch Abkanten aus einem ebenen Zuschnitt besonders kostengünstig herstellbar, einfach und präzise zu befestigen und hoch belastbar ist.

Vorteilhafterweise ist wie im Hauptpatent zwischen Trägeranordnung und Verriegelungseinheit eine Kulissenanordnung mit wenigstens einer Kulissenbahn und wenigstens einem in dieser geführten Führungselement ausgebildet, wobei die Kulissenbahn vorzugsweise in den Trägerplatten der Trägeranordnung vorgesehen ist und das Führungselement Teil der Verriegelungseinheit ist. Im Unterschied zu den bevorzugten Ausführungen des Hauptpatents ist die Kulissenbahn nicht geschlossen, sondern an wenigstens einer Öffnungsposition nach außen offen. Über diese Öffnungsposition ist das Führungselement der Verriegelungseinheit einsetzbar bzw. entnehmbar ist.

Die Verriegelungseinheit, welche insbesondere ein Verriegelungsgehäuse als Auflage für einen Containerbeschlag und in dem Verriegelungsgehäuse eine Verriegelung, insbesondere eine twist-lock Drehzapfenverriegelung enthält, ist innerhalb der Trägeranordnung in einer Halteposition, in welcher ein Containerbeschlag verriegelt und so der Container gehalten werden kann, vorteilhafterweise durch eine Sicherungseinrichtung festlegbar. Die Halteposition ist vorteilhafterweise durch einen Endpunkt der Kulissenbahn definiert, wobei die Kulissenbahn bei mehreren, insbesondere vertikal gegeneinander versetzt angeordneten Haltepositionen entsprechend mehrere Endpunkte aufweist. Die Kulissenbahn ist dabei vorzugsweise als zwischen den mehreren Endpunkten zusammenhängend ausgebildet mit einer gemeinsamen Öffnungsposition. Die Kulissenanordnung kann aber auch mehrere separate Kulissenbahnen zu verschiedenen Endpunkten aufweisen.

Um ein unbefugtes Entnehmen einer Verriegelungseinheit aus einer Trägereinheit zu verhindern, kann an der Trägeranordnung oder der Verriegelungseinheit ein Schloss vorgesehen sein, wobei vorteilhafterweise alle Schlösser an einem Fahrgestell mit demselben Schlüssel bedienbar sind.

Die Erfindung ist nachfolgend anhand bevorzugter Ausführungsbeispiele unter Bezugnahme auf die Abbildungen noch eingehend veranschaulicht. Dabei zeigt:
- Fig. 1: eine erste Ausführungsform einer Verriegelung in Seitenansicht,
- Fig. 2: die Anordnung der Fig. 1 in Draufsicht,
- Fig. 3: eine weitere vorteilhafte Ausführungsform in Seitenansicht,
- Fig. 4: ein Fahrgestell in Seitenansicht mit typischen Verriegelungspositionen.

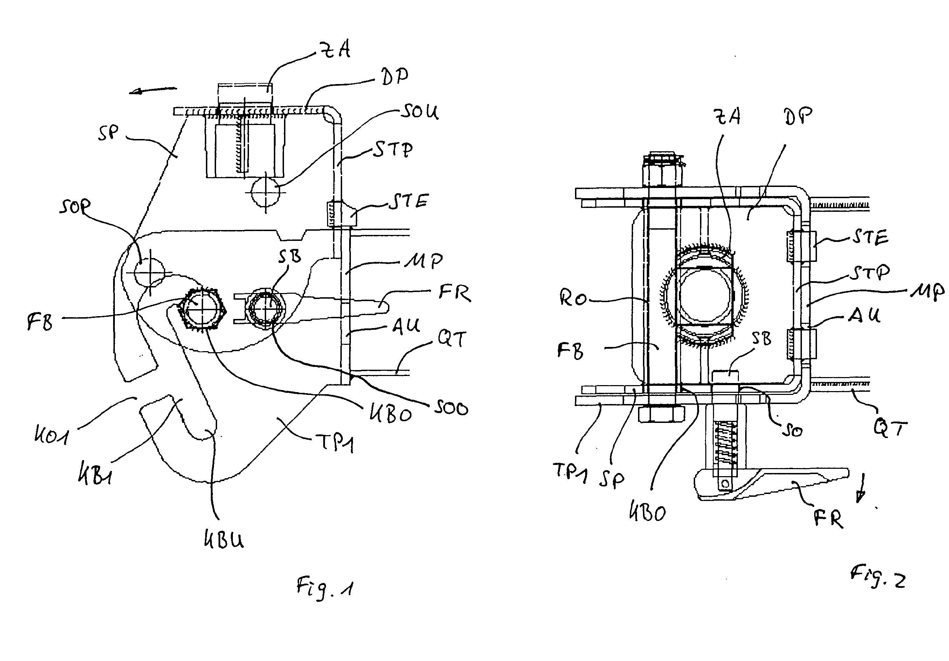

- Fig. 1 bis Fig. 3: sind transparent gezeichnet, um alle beschriebenen Elemente deutlich zu zeigen.

Die in Fig. 1 in Seitenansicht mit Blickrichtung parallel zur Längsachse eines Fahrgestells skizzierte Verriegelungsanordnung besteht im wesentlichen aus einer Trägeranordnung und einer Verriegelungseinheit. Die Trägeranordnung ist im skizzierten Beispiel durch einen einteiligen, vorzugsweise aus einem ebenen Zuschnitt durch zweifache Abkantung zu einer seitlich von einem Querträger QT eines Fahrgestells weg weisend offenen U-Form geformten Trägerkörper, welcher mit dem mittleren Plattenabschnitt MP der U-Form am Ende eines Querträgers QT des Fahrgestells verschweißt ist, gebildet. Die beiden Seitenschenkel der U-Form bilden in horizontaler Richtung beabstandete vertikale Trägerplatten TP1, welche eine Verriegelungseinheit zwischen sich einschließen. Der Trägerkörper ist vorzugsweise auch nach oben und unten offen.

Die Verriegelungseinheit umfasst im skizzierten Beispiel einen Grundkörper mit zwei vertikalen Seitenplatten SP und einer diese verbindenden Stützplatte STP, welche eine seitlich offene U-Form bilden, die nach oben durch eine horizontale Deckplatte DP abgeschlossen ist. In der Deckplatte ist eine Zapfenaufnahme ZA zur Aufnahme eines Drehzapfens einer gebräuchlichen twist-lock-Verriegelung befestigt. Der Drehzapfen sowie Bedienelemente zu dessen Handhabung sind in verschiedener Form bekannt und der Übersichtlichkeit halber nicht mit eingezeichnet. Seitenplatten SP, Stützplatte STP sowie Deckplatte DP können wiederum vorteilhafterweise durch Abkanten aus einem einteiligen ebenen Zuschnitt hergestellt werden, wobei vorzugsweise die Deckplatte DP in Fortsetzung der Stützplatte STP an deren oberer Kante horizontal umgebogen und günstigerweise entlang paralleler Kanten von Seitenplatten SP und Deckplatte DP Schweißnähte gebildet sind An der Stützplatte sind dem mittleren Plattenabschnitt MP des Trägerkörpers zugewandt Stützelemente STE an der Stützplatte vorgesehen, welche sich in der skizzierten Position der Verriegelungseinheit auf der Oberkante des Plattenabschnitts MP des Trägerkörpers abstützen.

Die Verriegelungseinheit enthält ferner in definierter Position einen horizontalen Führungsbolzen FB, welcher sich beidseitig über die Seitenplatten SP hinaus erstreckt. Der Führungsbolzen ist im skizzierten Beispiel als Schraubbolzen ausgeführt und zwischen den Seitenplatten SP durchgehend und von einem Rohr RO umgeben.

Die Trägerplatten TP1 weisen übereinstimmende Führungsstrukturen in Form jeweils einer Kulissenbahn KB1 auf, welche zwischen einem oberen Endpunkt KBO und einem unteren Endpunkt KBU zusammenhängend verläuft. Die Kulissenbahn verläuft von beiden Endpunkten aus ansteigend und in ihrem Verlauf zwischen den Endpunkten gegenüber diesen von dem Querträger abgewandt.

Die über die Seitenplatten SP der Verriegelungseinheit hinausragenden Abschnitte des Führungsbolzens FB sind in den Kulissenbahnen KB1 geführt und liegen in einer unteren bzw. einer oberen Halteposition der Verriegelungseinheit stabil in den Endpunkten KBU bzw. KBO ein. Mittels eines Federriegels FR, welcher an einer der Trägerplatten TP1 angeordnet ist, kann ein Sicherungsbolzen SB aus dem Eingriff in eine Sicherungsöffnung der Verriegelungseinheit gelöst und die Verriegelungseinheit um den Führungsbolzen geschwenkt und/oder mit dem Führungsbolzen entlang der Kulissenbahn verschoben werden. Die der Trägerplatte TP1 zugewandte Seitenplatte der Verriegelungseinheit weist eine Sicherungsöffnung SOO zur Festlegung der Verriegelungseinheit in der skizzierten oberen Halteposition mit im oberen Endpunkt KBO der Kulissenbahn abgestützten Führungsbolzen und eine Sicherungsöffnung SOU zur Festlegung der Verriegelungseinheit in einer unteren Halteposition mit im unteren Endpunkt KBU der Kulissenbahn abgestützten Führungsbolzen und bei Auflage der Stützelemente STE in Aussparungen AU des Plattenabschnitts MP auf. Zusätzlich kann eine weitere Sicherungsöffnung SOP zur Festlegung der Verriegelungseinheit in einer aus der skizzierten Position um den Führungsbolzen nach unten geschwenkten Parkposition vorgesehen sein.

Wesentliches Merkmal der vorliegenden Erfindung ist in der skizzierten Anordnung, dass die zwischen den Endpunkten zusammenhängende Kulissenbahn KB1 eine Öffnung KO1 aufweist, durch welche der Führungsbolzen nach außen verschoben und auf diese Weise die gesamte Verriegelungseinheit aus der Trägeranordnung entnommen werden kann. Die vom Querträger weg gerichtete Krümmung des Verlaufs der Kulissenbahn ist hierfür besonders günstig. Die Öffnung KO1 kann an sich an beliebiger Stelle der Kulissenbahn liegen, sollte aber einen Mindestabstand zu den Endpunkten KBO, KBU aufweisen. In anderer Ausführung kann die im skizzierten Beispiel zwischen zwei Endpunkten KBO, KBU zusammenhängende Kulissenbahn KB1 auch ersetzt sein durch zwei separat nach außen mündende Kulissenbahnen oder vergleichbar wirkende Führungen zu den beiden Endpunkten.

Die Fig. 3 zeigt eine Ausführung einer Verriegelungsanordnung mit nur einer Halteposition entsprechend der in Fig. 1 skizzierten oberen Halteposition. Im Beispiel der Fig. 3 führt eine Kulissenbahn KB3 als Führungsstruktur in Trägerplatten TP3 für den Führungsbozen FB mit von einem Endpunkt schräg nach oben gerichtetem Verlauf über eine Öffnung KO3 nach außen. In Fig. 3 ist dieselbe Verriegelungseinheit vorgesehen wie in Fig. 1, wobei die Sicherungsöffnung SOU hier ohne Sicherungsfunktion bleibt.

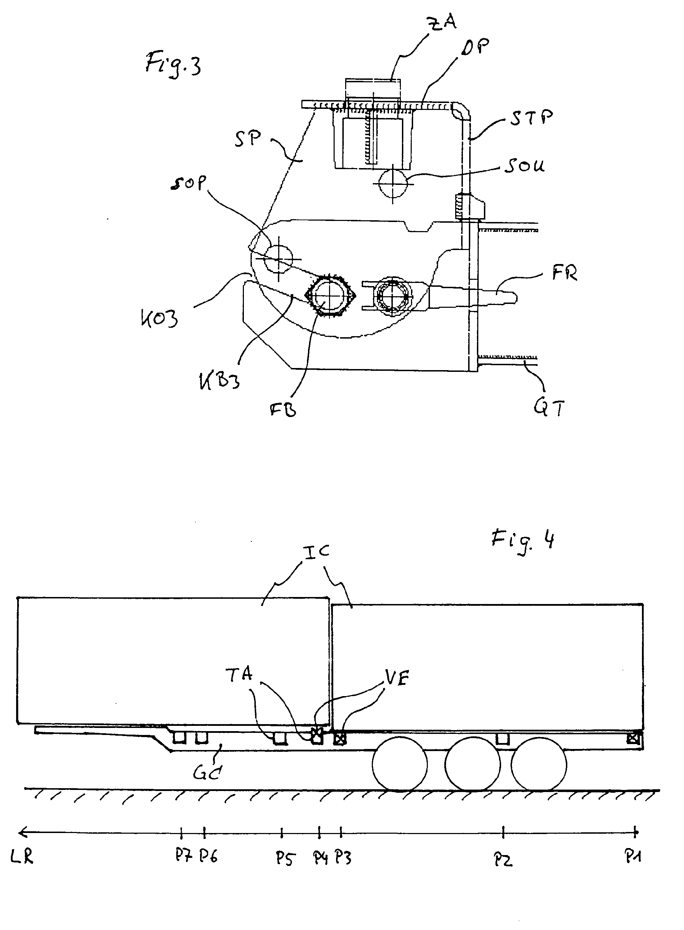

Fig. 4 zeigt in Seitenansicht ein Gooseneck-Fahrgestell GC mit in Längsrichtung LR beabstandet sieben Verriegelungspositionen P1 bis P7 für unterschiedliche Containerbeladungen, von denen bei der skizzierten Beladungssituation mit zwei 20'-ISO-Containern IC die hierbei benötigten drei Positionen P1, P3 und P4 mit Kreuzen als mit Verriegelungseinheiten VE bestückte Trägeranordnungen TA markiert sind, wogegen an den übrigen Verriegelungspositionen lediglich unbestückte Trägeranordnungen TA vorliegen.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar. Insbesondere ist für die Form der Kulissenbahnen und die Lage der Öffnungen eine große Zahl von Variationen denkbar. Kulissenbahnen und Führungsbolzen können zwischen Trägeranordnung und Verriegelungseinheit auch vertauscht sein. Die Festlegung der Verriegelungseinheit in der Trägeranordnung kann auch auf andere Weise erfolgen.

## Patentansprüche

1. Verriegelungsanordnung zur Halterung von Containern auf einem Fahrgestell mit einer in einer Trägeranordnung abstützbaren und verschiebbaren Verriegelungseinheit, **dadurch gekennzeichnet, dass** die Verriegelungseinheit werkzeuglos aus der Trägeranordnung entnehmbar bzw. in diese einsetzbar und in wenigstens einer Halteposition in der Trägeranordnung festlegbar ist.

2. Anordnung nach Anspruch 1, **dadurch gekennzeichnet, dass** die Trägeranordnung mit einem Ende eines Querträgers des Fahrgestells fest verbunden, insbesondere verschweißt ist.

3. Anordnung nach Anspruch 1 oder 2, **dadurch gekennzeichnet, dass** die Trägeranordnung zwei horizontal beabstandete vertikale Trägerplatten enthält.

4. Anordnung nach einem der Ansprüche 1 bis 3, **dadurch gekennzeichnet, dass** zwischen Trägeranordnung und Verriegelungseinheit eine Kulissenanordnung mit wenigstens einer Kulissenbahn ausgebildet ist.

5. Anordnung nach Anspruch 4, **dadurch gekennzeichnet, dass** die Kulissenbahn in der Trägeranordnung insbesondere in vertikalen Trägerplatten ausgebildet ist.

6. Anordnung nach Anspruch 4 oder 5, **dadurch gekennzeichnet, dass** die Kulissenbahn eine Öffnung aufweist, über welche ein Führungselement der Kulissenanordnung entnehmbar bzw. einführbar ist.

7. Anordnung nach einem der Ansprüche 1 bis 6, **dadurch gekennzeichnet, dass** die Trägeranordnung seitlich nach außen weisend offen ist.

8. Anordnung nach einem der Ansprüche 4 bis 6, **dadurch gekennzeichnet, dass** eine Halteposition durch einen Endpunkt der Kulissenbahn gegeben ist.

9. Anordnung nach einem der Ansprüche 4 bis 6, **dadurch gekennzeichnet, dass** wenigstens zwei vertikal versetzte Haltepositionen vorhanden sind.

10. Anordnung nach Anspruch 9, **dadurch gekennzeichnet, dass** die verschiedenen Haltepositionen als unterschiedliche Endpunkte einer zusammenhängenden Kulissenbahn ausgebildet sind.

11. Anordnung nach einem der Ansprüche 1 bis 10, **dadurch gekennzeichnet, dass** ein Sicherheitsschloss gegen unbefugte Entnahme der Verriegelungseinheit aus der Trägeranordnung vorgesehen ist.

12. Fahrgestell mit einer Mehrzahl von Verriegelungspositionen für Verriegelungsanordnungen nach einem der Ansprüche 1 bis 11 zur Halterung von Containern, wobei eine Verriegelungsanordnung aus einer Verriegelungseinheit und einer diese tragenden Trägeranordnung besteht, **dadurch gekennzeichnet, dass** an jeder Verriegelungsposition eine Trägeranordnung fest mit dem Fahrgestell verbunden ist und dass nur ein Teil der Trägeranordnungen mit Verriegelungseinheiten bestückt ist.

13. Fahrgestell nach Anspruch 12, **dadurch gekennzeichnet, dass** die Trägeranordnungen mit den Enden von Querträgern des Fahrgestells fest verbunden sind und von diesen nach außen ragen.

14. Fahrgestell nach Anspruch 12, **dadurch gekennzeichnet, dass** die Trägeranordnungen als zur Seite offene U-förmige Trägerkörper ausgeführt sind.
